# EUROPEAN PATENT SPECIFICATION

(11) **EP 0 688 524 B1**
(45) Date of publication and mention of the grant of the patent: **10.02.1999**
(21) Application number: 95201471.0
(22) Date of filing: 06.06.1995
(51) Int. Cl.: A47J 31/44

(54) **Modular element for containing cups in coffee machines**
Model zum Bereithalten von Tassen in Kaffeemaschinen
Récipient modulaire comportant des tasses dans une machine à café

(30) Priority: 24.06.1994 IT MI940462 U
(43) Date of publication of application: 27.12.1995
(73) Proprietor: CIMBALI S.p.A., I-20082 Binasco (MI) (IT)
(72) Inventor: Locati, Santino, I-20143 Milano (IT)
(74) Representative: Appoloni, Romano

(56) References cited:
- EP-A- 0 599 048
- WO-A-93/19656
- DE-A- 1 918 525
- DE-C- 4 139 804
- FR-A- 1 471 026
- US-A- 1 499 903
- PATENT ABSTRACTS OF JAPAN vol. 14 no. 126 (C-0699) ,9 March 1990 & JP-A-02 001210 (SHARP CORP) 5 January 1990,
- PATENT ABSTRACTS OF JAPAN vol. 14 no. 63 (C-0685) ,6 February 1990 & JP-A-01 288227 (NIPPON DENSO CO LTD) 20 November 1989,

## Description

This invention relates to a modular element for containing cups in coffee machines.

Coffee cups used in public places such as bars, restaurants etc. are located for ease of use in appropriate elements or housings suitable for containing them. In particular, the cups are preferably arranged so that they receive a certain heat which improves or maintains hot the drink fed into them by the coffee machine. This is particularly useful in cold environments or during the cold season.

It is therefore a fairly general practice to heat the cups before feeding the hot drink into them, so preventing their rapid cooling with consequent cooling of the drink.

For this purpose in present-day coffee machines, especially in public or communal places, the cups are usually placed on the top of the coffee machine in a suitable rack. This rack is heated either by the underlying part of the machine or by an incorporated heating element of resistance or other type, which is operated to forcibly heat the cups.

Although such an arrangement contains and reasonably adequately heats the cups, it is not able to act to change their level of hygiene. In this respect, after use the cups are washed by automatic appliances or by a manual process, and then placed on their containing rack to await reuse. While in this position they accumulate dust deposits or generally undergo the action of bacteria or other noxious agents. It is for this reason that suitable compartments have been created within certain machines to not only improve the heating of the cups but also to provide greater protection against possible external contaminants.

However even in this case a good result is not obtained, also because the available space is extremely limited by the layout of the constituent parts of the coffee machine.

JP-A-02 001 210 discloses a modular element according to the preamble of claim 1. The object of the present invention is to provide an element which is able to receive cups or the like and heat them while ensuring the best possible level of hygiene.

This object is attained according to the present invention by a modular element for containing cups in coffee machines as claimed in claim 1.

Preferably, said structure is of prismatic box type and consists of three vertical lateral walls insulated with expanded material, there being provided in a fourth vertical wall an aperture which is connected to a further top aperture where a further grid-type shelf is positioned. A heating element is associated with at least one grid-type shelf.

The characteristics and advantages of a modular element for containing cups in coffee machines according to the present invention will be more apparent from the following description given by way of non-limiting example with reference to the accompanying schematic drawings, in which:

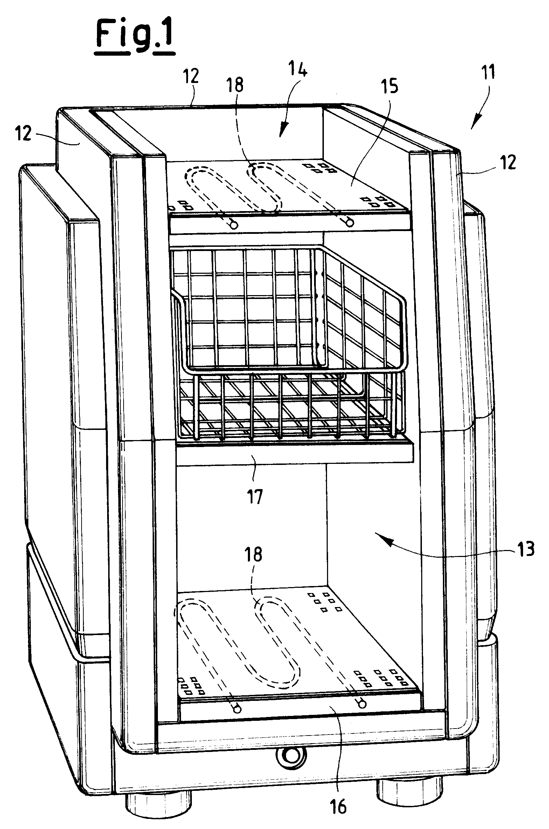

Figure 1 is a perspective view of one embodiment of a modular element for containing coffee cups;

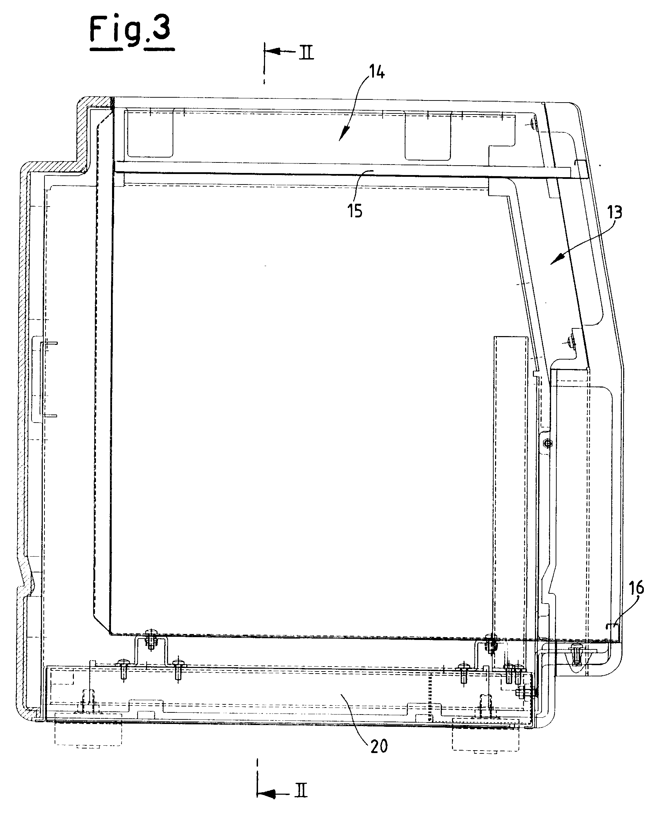

Figure 2 is a front vertical section through the modular element of the present invention on the line II-II of Figure 3; and
Figure 3 is a vertical cross-section through the modular element of Figure 1.

The figures show a modular element for containing cups in coffee machines which is constructed and shown as an element separate from the body of the coffee machine and indicated overall by 11.

The modular element 11 comprises a containing structure of prismatic box type, consisting of three vertical lateral walls 12 insulated with expanded material. The structure comprises an aperture 13 along the fourth vertical wall to allow the cups, not shown, to be inserted and positioned, and an aperture 14 at the top, at which there is provided a shelf, for example consisting of a first grid 15.

Further grid-type shelves, consisting in the illustrated embodiment of a base second grid 16 and an intermediate third grid 17, are provided between two opposing lateral walls 12. The first and second grid 15 and 16 are generally fixed and are provided with heating elements 18, such as resistance elements. The third grid 17 is removable so as to be able to be positioned at different heights within the structure by virtue of support elements 19 fixed to the facing walls 12 at various heights. The intermediate third grid 17 may or may not be provided with heating elements 18.

Below the second grid 16 there is located a sanitizing unit indicated overall by 20. The sanitizing unit 20 consists of an ozone generator which feeds ozone into the structure to hence strike the objects contained therein, such as the said cups. This flow of ozone from the bottom upwards destroys bacteria, mildew and general viruses present on the cups, to render them perfectly hygienic.

It should be noted that the presence of the heating element in the top grid 15 ensures the reduction of that ozone released by the relative unit which has risen upwards, so limiting its diffusion into the external environment. This therefore enables ozone to be emitted into the environment without exceeding the limits defined by the relative regulations.

Suitable operating means can be provided for activating the heating elements and the sanitizing unit according to specific requirements.

Alternatively, the modular element for containing cups in coffee machines according to the present invention and comprising said sanitizing unit can be directly installed in a compartment within the coffee machine, for example in simplified form as a single grid with or without a resistance element.

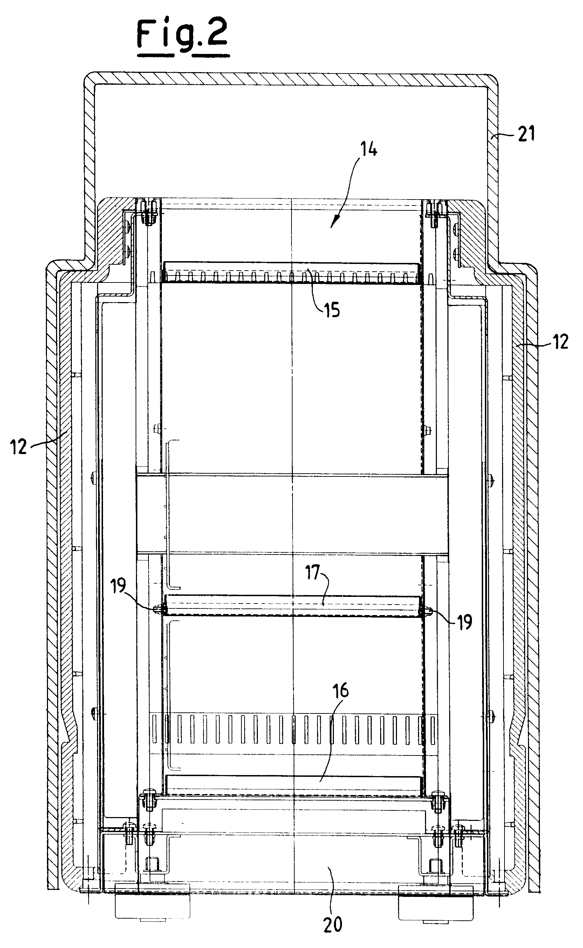

A cover element 21 shown in section in Figure 2 can also be provided as an additional element to cover the entire modular element, so making it possible to completely sterilize its interior.

## Claims

1. A modular element for containing cups in coffee machines, comprising a containing structure (12,13), between walls of which there is provided at least one grid-type shelf (16,17) below which an ozone generator (20) is located, characterised in that there is further positioned a grid-type shelf (15) near the top of said structure which provides a heating element (18) which ensures the reduction of the ozone released by said generator (20).

2. A modular element as claimed in claim 1, characterised in that said structure is of prismatic box type and consists of three vertical lateral walls (12) insulated with expanded material, there being provided in -a fourth vertical wall an aperture (13) which is connected to a further top aperture (14) where said further grid-type shelf (15) is positioned.

3. A modular element as claimed in claim 1 or 2, characterised in that a further heating element (18) is associated with a bottom grid-type shelf (16).

4. A modular element as claimed in any one of the preceding claims, characterised in that in an intermediate portion of two opposing vertical lateral walls (12) of said structure there is provided at least one further grid-type shelf (17) which is removable so as to be able to be positioned on support elements (19) fixed to said two walls (12) at various heights within said structure.

5. A modular element as claimed in any one of the preceding claims, characterised by comprising a cover element (21) for said modular element.

## Patentansprüche

1. Modulares Element zur Aufnahme von Tassen in Kaffeemaschinen, umfassend eine Aufnahmestruktur (12, 13), wobei zwischen Wänden derselben mindestens ein Bord (16, 17) vom Gittertyp vorgesehen ist, unterhalb dessen ein Ozongenerator (20) angeordnet ist,
**dadurch gekennzeichnet,** daß ferner ein Bord (15) vom Gittertyp nahe des oberen Endes der Struktur angeordnet ist, das ein Heizelement (18) bereitstellt, welches die Reduzierung des von dem Generator (20) freigesetzten Ozons gewährleistet.

2. Modulares Element nach Anspruch 1, dadurch gekennzeichnet, daß die Struktur vom Typ eines prismenförmigen Kastens ist und drei vertikale Seitenwände (12) umfaßt, die mit aufgeschäumtem Material isoliert sind, wobei in einer vierten vertikalen Wand eine Öffnung (13) vorgesehen ist, die mit einer weiteren oberen Öffnung (14) verbunden ist, wo das weitere Bord (15) vom Gittertyp angeordnet ist.

3. Modulares Element nach einem der Ansprüche 1 oder 2, dadurch gekennzeichnet, daß ein weiteres Heizelement (18) einem unteren Bord (16) vom Gittertyp zugeordnet ist.

4. Modulares Element nach einem der vorstehenden Ansprüche, dadurch gekennzeichnet, daß in einem Zwischenbereich von zwei einander gegenüberliegenden vertikalen Seitenwänden (12) der Struktur mindestens ein weiteres Bord (17) vom Gittertyp vorgesehen ist, das so entnehmbar ist, daß es auf Halteelementen (19), welche an den zwei Wänden (12) in verschiedenen Höhen innerhalb der Struktur festgelegt sind, angeordnet werden kann.

5. Modulares Element nach einem der vorstehenden Ansprüche, dadurch gekennzeichnet, daß es ein Abdeckungselement (21) für das modulare Element umfaßt.

## Revendications

1. Récipient modulaire destiné à contenir des tasses dans une machine à café, comprenant une structure de logement (12, 13), entre les parois de laquelle est prévue au moins une étagère de type grille (16, 17) au-dessous de laquelle est situé un générateur d'ozone (20), caractérisé en ce qu'il est de plus positionnée une étagère de type grille (15) à proximité du dessus de la structure, fournissant un élément de chauffage (18) qui assure la réduction de l'ozone libéré par le générateur (20).

2. Récipient modulaire selon la revendication 1, caractérisé en ce que la structure est du type à caisson prismatique et consiste en trois parois latérales verticales (12) isolées par du matériau expansé, une ouverture (13) étant ménagée dans une quatrième paroi verticale qui est raccordée à une autre ouverture supérieure (14) ou est positionnée l'autre étagère de type grille (15).

3. Récipient modulaire selon la revendication 1 ou 2 caractérisé en ce qu'un autre élément de chauffage (18) est associé à l'étagère de type grille inférieure (16).

4. Récipient modulaire selon l'une quelconque des revendications précédentes caractérisé en ce que dans une portion intermédiaire des deux parois latérales verticales opposées (12) de cette structure, une autre étagère de type grille (17) qui est amovible de façon à pouvoir être positionnée sur des éléments de support (19) fixés sur les deux parois (12) à différentes hauteurs à l'intérieur de la structure.

5. Récipient modulaire selon l'une quelconque des revendications précédentes, caractérisé par le fait de comprendre un élément de recouvrement (27) pour l'élément modulaire.
